# DEMANDE DE BREVET EUROPEEN

(11) **EP 1 447 581 A1**
(43) Date de publication de la demande: **18.08.2004**
(21) Numéro de dépôt: 04290108.2
(22) Date de dépôt: 15.01.2004
(51) Int. Cl.: F16D 23/06

(54) **Dispositif de synchronisation pour boîte de vitesses mécaniques**

(30) Priorité: 07.02.2003 FR 0301490
(71) Demandeur: Peugeot Citroen Automobiles SA, 78140 Vélizy Villacoublay (FR)
(72) Inventeur: Delporte, Stéphane, 91190 St Aubin (FR)
(74) Mandataire: Thinat, Michel

(57) **Abrégé**

La présente invention concerne un dispositif de synchronisation pour boîte de vitesses mécanique.

Le dispositif est caractérisé en ce qu'il comprend une bague tronconique (10) interposée entre le manchon de crabotage (3) et le pignon de transmission (1, 2), liée à rotation au manchon de crabotage par des tocs (11) solidaires de la bague tronconique (10) et permettant un déplacement de la bague tronconique (10) vers le pignon de transmission (12) lors du déplacement dans le même sens du manchon de crabotage (3) pour amener la bague tronconique (10) en contact par friction sur une portée tronconique conjuguée (13) d'une paroi cylindrique solidaire de la face latérale du pignon de transmission (1, 2) autour des crabots (5) de ce dernier, avant que les crabots du manchon de crabotage viennent en contact avec ceux du pignon de transmission (1, 2).

L'invention trouve application dans le domaine de l'automobile.

## Description

La présente invention concerne un dispositif de synchronisation pour boîte de vitesses mécanique.

On connaît un tel dispositif comprenant au moins un pignon de transmission monté fou sur un arbre d'entraînement et comportant sur l'une de ses faces des crabots régulièrement répartis autour de son axe de symétrie, un manchon de crabotage solidaire en rotation de l'arbre d'entraînement en étant déplaçable sur cet arbre vers le pignon de transmission et comportant sur au moins l'une de ses faces des crabots régulièrement répartis autour de son axe de symétrie et pouvant rentrer en contact avec les crabots du pignon de transmission lors du déplacement du manchon vers le pignon de transmission pour entraîner ce dernier en rotation.

Ce dispositif connu comprend en outre une bague en matériau déformable logée dans une gorge d'une paroi cylindrique du pignon de transmission disposée autour des crabots de celui-ci, la bague étant adaptée pour freiner une paroi cylindrique solidaire du manchon de crabotage lors du déplacement de celui-ci vers le pignon de transmission. Une telle bague permet notamment de réduire le choc lors du contact entre les crabots du manchon de crabotage et ceux du pignon de transmission et, par conséquent, de diminuer le bruit engendré à l'extérieur du carter de la boîte de vitesses.

Cependant, ce dispositif de synchronisation connu a pour inconvénient majeur que la bague en matériau déformable peut présenter des cas d'usure prématurée.

La présente invention a pour but d'éliminer l'inconvénient ci-dessus en proposant un dispositif de synchronisation pour boîte de vitesses mécanique notamment d'un véhicule automobile, comprenant au moins un pignon de transmission monté fou sur un arbre d'entraînement et comportant sur l'une de ses faces des crabots régulièrement répartis autour de son axe de symétrie, un manchon de crabotage solidaire en rotation de l'arbre d'entraînement en étant déplaçable sur cet arbre vers le pignon de transmission et comportant sur au moins l'une de ses faces des crabots régulièrement répartis autour de son axe de symétrie et pouvant rentrer en contact avec les crabots du pignon de transmission lors du déplacement du manchon vers le pignon de transmission pour entraîner ce dernier en rotation, et qui est caractérisé en ce qu'il comprend une bague tronconique interposée entre le manchon de crabotage et le pignon de transmission, liée à rotation au manchon de crabotage par des tocs solidaires de la bague tronconique et permettant un déplacement de la bague tronconique vers le pignon de transmission lors du déplacement dans le même sens du manchon de crabotage pour amener la bague tronconique en contact par friction sur une portée tronconique conjuguée d'une paroi cylindrique solidaire de la face latérale du pignon de transmission autour des crabots de ce dernier, avant que les crabots du manchon de crabotage viennent en contact avec ceux du pignon de transmission.

Selon un premier mode de réalisation, les tocs de la bague tronconique comprennent chacun une languette traversant une fenêtre réalisée au travers du manchon de crabotage et comportant sur l'un de ses côtés une rampe coopérant avec une rampe antagoniste de l'un des bords de la fenêtre pour permettre au manchon de crabotage d'exercer sur chacun des tocs un effort axial de déplacement de la bague tronconique vers le pignon de transmission.

Chaque toc est relié à la bague tronconique par une zone de flexibilité permettant au manchon de crabotage d'exercer sur le toc, par la rampe de la fenêtre en appui sur la rampe du toc, un effort circonférentiel écartant élastiquement le toc vers le bord de la fenêtre opposé à celui comportant la rampe lorsque la bague tronconique est en appui sur la portée tronconique de manière à permettre à la rampe de la fenêtre d'effacer la rampe du toc pour que le manchon de crabotage puisse continuer son déplacement de crabotage avec le pignon de transmission.

Les bords des fenêtres comportant les rampes sont des bords radiaux et chaque languette formant toc est disposée sensiblement transversalement au bord radial correspondant de la fenêtre.

Selon un second mode de réalisation, les tocs de la bague tronconique comprennent chacun une languette traversant une fenêtre réalisée au travers du manchon de crabotage et comportant sur l'une de ses faces une rampe coopérant avec une rampe antagoniste de l'un des côtés de la fenêtre pour permettre au manchon de crabotage d'exercer sur chacun des tocs un effort axial de déplacement de la bague tronconique vers le pignon de transmission.

Chaque toc est relié à la bague tronconique par une zone de flexibilité permettant au manchon de crabotage d'exercer sur le toc, par la rampe de la fenêtre en appui sur la rampe du toc, un effort radial écartant élastiquement le toc vers le bord de la fenêtre opposé à celui comportant la rampe lorsque la bague tronconique est en appui sur la portée tronconique de manière à permettre à la rampe de la fenêtre d'effacer la rampe du toc pour que le manchon de crabotage puisse continuer son déplacement de crabotage avec le pignon de transmission.

Les bords des fenêtres comportant les rampes sont les bords sensiblement circonférentiels et chaque languette formant toc est disposée sensiblement parallèlement au bord circonférentiel correspondant de la fenêtre.

Les tocs sont régulièrement espacées autour de l'axe de symétrie de la bague tronconique et s'étendent en direction opposée au pignon de transmission.

Les tocs et la bague tronconiques sont une pièce monobloc.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 est une vue en perspective d'un dispositif de synchronisation suivant un premier mode de réalisation de l'invention ;
- la figure 2 est une vue en perspective des éléments situés entre les deux pignons de transmission du dispositif de synchronisation de la figure 1 ;
- la figure 3 est une vue en perspective éclatée représentant uniquement les deux pignons de transmission ;
- la figure 4 est une vue en plan du manchon de crabotage du dispositif de synchronisation de la figure 1 ;
- la figure 5 est une vue en perspective d'une bague tronconique faisant partie du dispositif de synchronisation de la figure 1 ;
- la figure 6 est une vue en perspective, avec arrachement partiel, de l'ensemble comprenant le manchon de crabotage et les deux bagues tronconiques du dispositif de synchronisation de la figure 1 ;
- la figure 7 est une vue agrandie de la partie cerclée en VII de la figure 6 et représentant le manchon de crabotage en position de crabotage ;
- la figure 8 est une vue en perspective d'un ensemble comprenant un manchon de crabotage et deux bagues tronconiques du dispositif de synchronisation du second mode de réalisation de l'invention ;
- la figure 9 est une vue en perspective du manchon de crabotage de la figure 8 ; et
- la figure 10 est une vue en perspective de l'une des bagues tronconiques de l'ensemble de la figure 8.

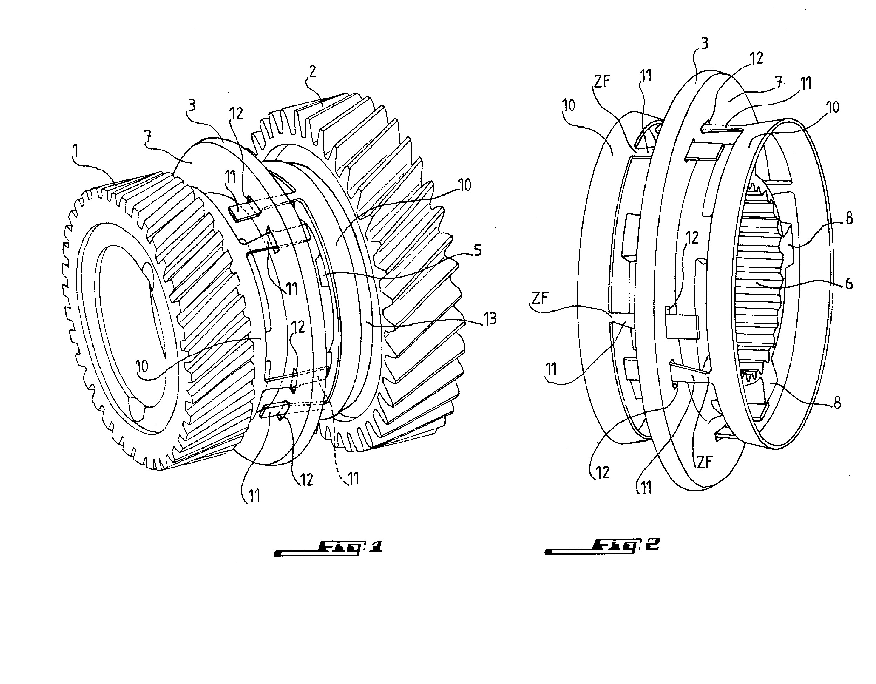

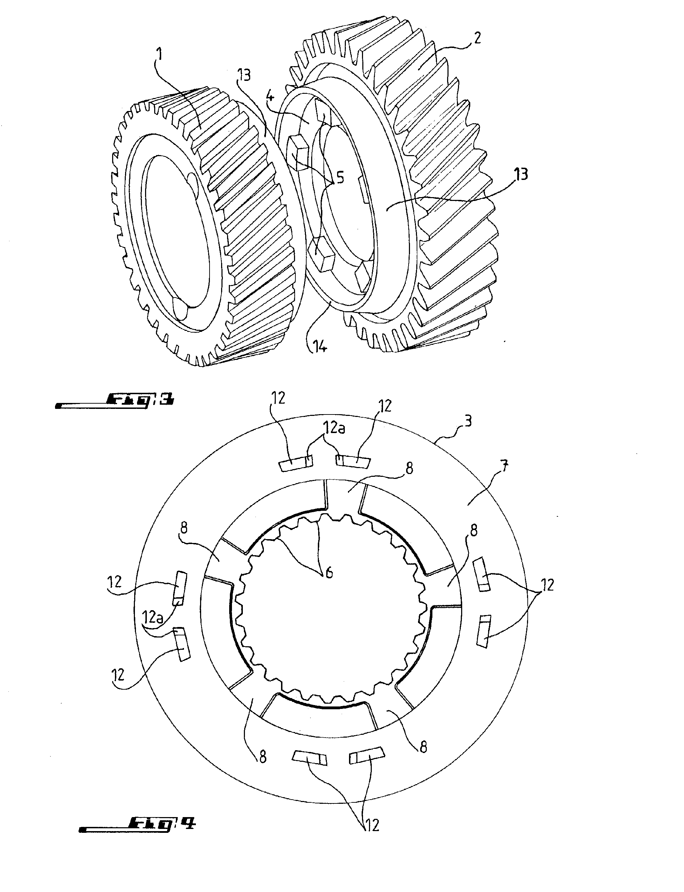

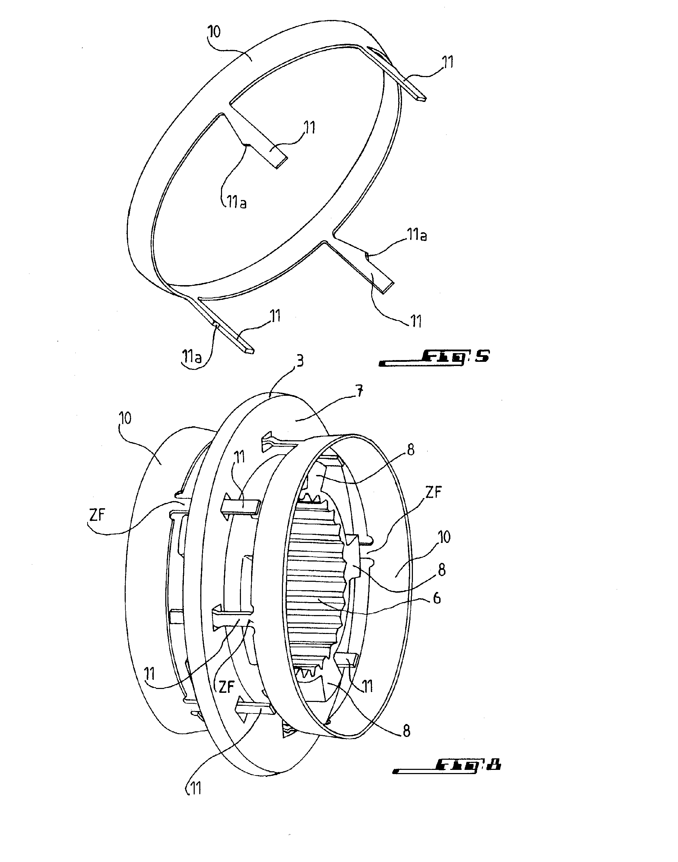

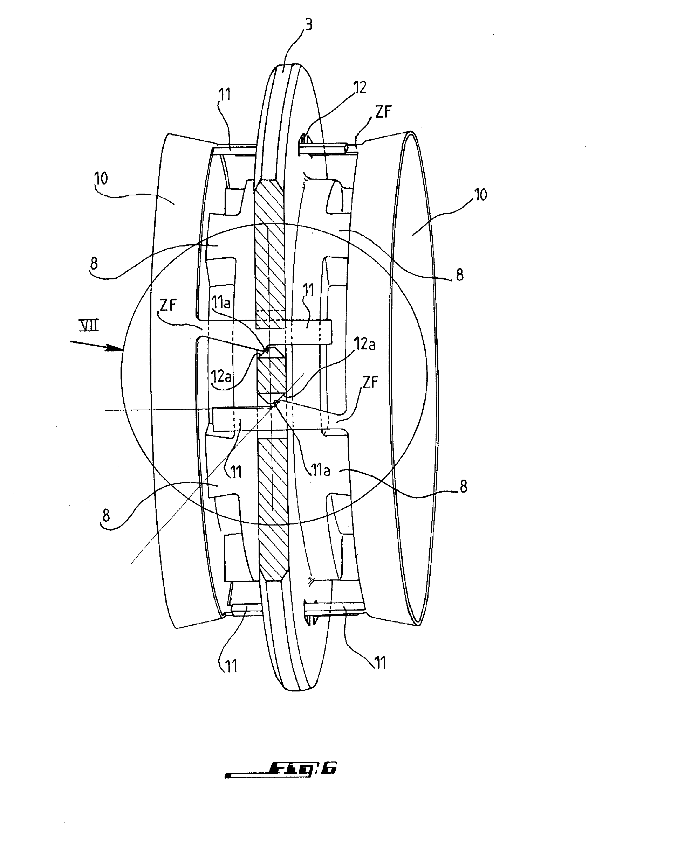

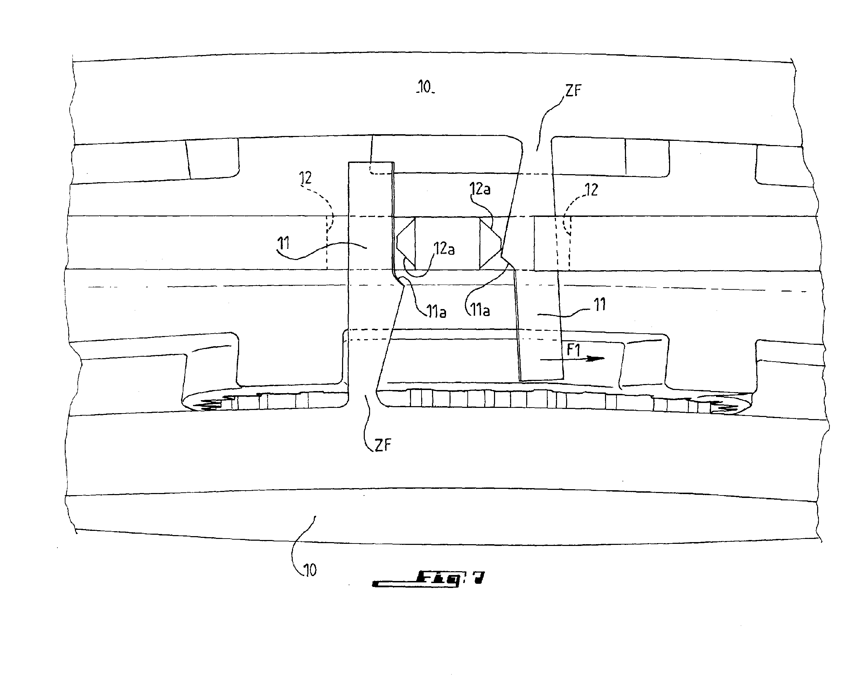

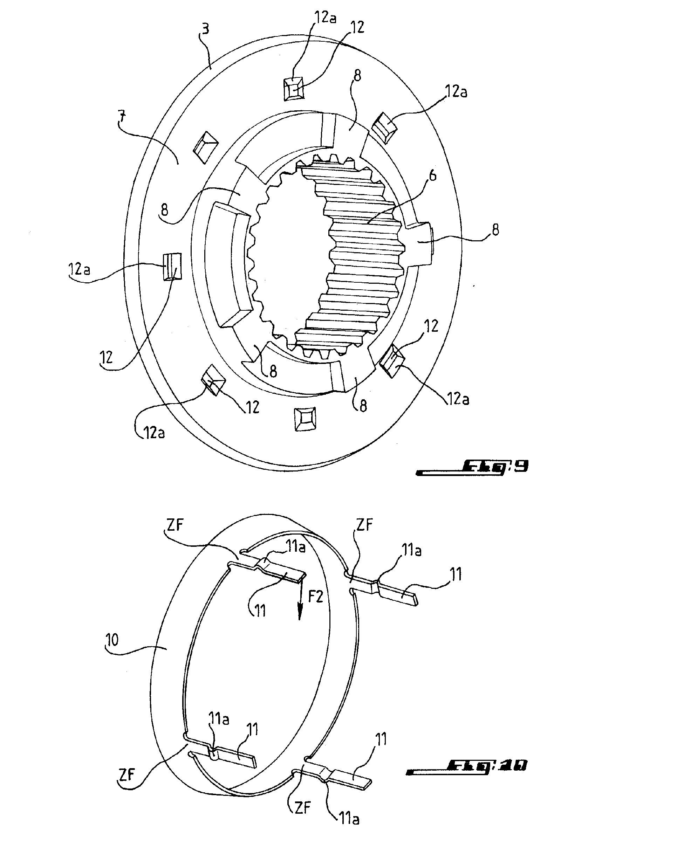

Le dispositif de synchronisation faisant l'objet du premier mode de réalisation de l'invention est représenté aux figures 1 à 7. Ce dispositif est monté sur un arbre d'entraînement, non représenté, d'une boîte de vitesses mécanique d'un véhicule automobile.

Le dispositif comprend deux pignons de transmission 1, 2 montés sur l'arbre d'entraînement de part et d'autre d'un manchon de crabotage 3.

Chaque pignon de transmission 1, 2 comporte sur sa face latérale 4 située en regard du manchon de crabotage 3 plusieurs crabots 5, dans le cas présent au nombre de cinq, répartis régulièrement autour de l'axe de symétrie du pignon 1, 2.

Chaque pignon de transmission 1, 2 comporte en outre une denture hélicoïdale sur sa périphérie adaptée pour engrener avec un autre pignon de transmission relatif au même rapport de vitesse et monté sur un second arbre d'entraînement, non représenté, monté parallèlement au premier arbre d'entraînement mentionné précédemment.

Le manchon de crabotage 3 est solidaire à rotation du premier arbre d'entraînement par des cannelures internes 6 permettant au manchon 3 de se déplacer le long de cet arbre pour se rapprocher de l'un ou l'autre des pignons de transmission 1, 2 sous la commande d'une crosse d'une fourchette, non représentée, comme cela est connu en soi.

Le manchon de crabotage 3 comprend en outre sur chacune de ses faces latérales 7 plusieurs crabots 8 d'un nombre identique aux crabots 5 de chaque pignon de transmission 1, 2 et de forme identique à ces derniers.

Selon l'invention, le dispositif de synchronisation comprend également deux bagues tronconiques identiques 10 disposées de part et d'autre du manchon de crabotage 3 entre ce dernier et le pignon de transmission correspondant 1, 2.

Chaque bague tronconique 10 est liée à rotation au manchon de crabotage 3 par des tocs 11 réalisés en une seule pièce avec la bague 10 en étant régulièrement espacés autour de son axe de symétrie et faisant saillie de la bague 10 d'un même côté à l'opposé du pignon correspondant 1, 2. Pour assurer cette liaison à rotation, les tocs 11 d'une bague tronconique 10 traversent respectivement des fenêtres 12 réalisées au travers de la paroi du manchon de crabotage 3 en étant régulièrement espacées les unes des autres sur une même circonférence. Les fenêtres 12 de passage des tocs 11 d'une bague tronconique 10 sont situées sur la même circonférence que les fenêtres 12 de passage des tocs 11 de l'autre bague tronconique 10 en étant régulièrement décalées les unes des autres de façon que un toc 11 de l'une des bagues 10 soit situé à proximité d'un toc 11 de l'autre bague.

Dans le cas présent, quatre tocs 11 sont prévus pour chaque bague de synchronisation 10, mais leur nombre peut différer, au moins deux tocs diamétralement opposés étant au minimum nécessaires.

Chaque toc 11 est constitué d'une languette qui comporte sur l'un de ces côtés longitudinaux une rampe 11a pouvant coopérer avec une rampe antagoniste 12a formée dans l'un des bords radiaux de la fenêtre 12 pour permettre au manchon de crabotage 3 d'exercer sur la languette 11 un effort axial de déplacement de la bague tronconique 10 vers le pignon de transmission correspondant 1, 2 pour amener la bague tronconique 10 en contact par friction sur une portée tronconique conjuguée 13 constituant la face externe d'une paroi cylindrique 14 solidaire de la face latérale correspondante du pignon de transmission 1, 2 et disposée autour des crabots 5 de ce dernier.

Chaque languette 11 est reliée au bord circulaire correspondant de sa bague tronconique 10 par une zone de flexibilité ZF permettant à la languette 11 d'être écartée élastiquement sensiblement en sens circonférentiel de sa position de repos vers le bord radial de la fenêtre 12 opposé à celui comportant la rampe 12a, comme on le verra ultérieurement.

Chaque languette 11 traverse perpendiculairement le manchon de crabotage 3 et s'étend au travers de la fenêtre correspondante 12 en étant disposée sensiblement perpendiculairement aux bords radiaux de la fenêtre et s'étend de la bague tronconique correspondante 10 de façon que son extrémité libre faisant saillie de la face correspondante 7 du manchon de crabotage 3 n'interfère pas avec la bague tronconique opposée 10.

Le fonctionnement du dispositif de l'invention ressort déjà de la description qui précède et va être maintenant expliqué.

Lors du déplacement du manchon de crabotage 3 vers l'un des deux pignons de transmission 10, les rampes 12a des fenêtres 12, en appui respectivement sur les rampes 11a des languettes 11 de la bague tronconique 10 située entre le manchon 3 et le pignon correspondant 1, 2, déplacent dans le même sens les languettes 11 sensiblement parallèlement à l'axe longitudinal de l'arbre d'entraînement jusqu'à ce que la bague tronconique 6 vienne en appui par friction sur la portée tronconique conjuguée 13 du pignon de transmission 1, 2. En continuant son déplacement, le manchon 3 exerce une force axiale sur les côtés correspondants des languettes 11 telle que les rampes 12a effacent les rampes 11a en écartant élastiquement les languettes 11 vers les bords radiaux des fenêtres 12 opposés aux bords comportant les rampes 12a comme indiqué par la flèche F1 en figure 7, c'est-à-dire que chaque languette 11 se déplace élastiquement dans son propre plan autour de la zone de flexibilité ZF, dans le sens sensiblement circonférentiel correspondant. Dans ces conditions, les crabots 8 du manchon de crabotage 3 viennent en contact respectivement avec les crabots 5 du pignon de transmission correspondant 1, 2.

Ainsi, le déplacement du manchon 3 vers l'un des pignons de transmission 1, 2 tend à synchroniser les vitesses de rotation relatives au pignon 1, 2 et au manchon 3. Compte-tenu du fait que le dispositif de synchronisation comprend des crabots frontaux 5, 8, il est nécessaire de garder une différence de vitesse de rotation entre le manchon 3 et le pignon 1, 2.

Selon le second mode de réalisation de l'invention représenté aux figures 8 à 10, où les éléments identiques à ceux du premier mode de réalisation ou accomplissant la même fonction que ceux-ci, portent les mêmes références, les languettes 11 de chaque bague tronconique 10 sont raccordées au bord circulaire correspondant de la bague 10 par des zones de flexibilité ZF telles qu'elles permettent à chaque languette 11 de fléchir élastiquement et radialement suivant cette zone. En outre, chaque rampe 11a d'une languette formant toc 11 est formée sur la languette de façon à coopérer avec une rampe 12a formée dans l'un des bords sensiblement circonférentiels de la fenêtre 12 traversée par la languette 11. Dans le cas présent, chaque rampe 12a d'une fenêtre est formée dans le bord sensiblement circonférentiel le plus radialement externe.

Lorsque le manchon de crabotage 3 est déplacé vers l'un des deux pignons de transmission 1, 2 correspondant au rapport de vitesse désiré, les rampes 12a des fenêtres 12 du manchon 3 provoquent, par appui respectivement sur les rampes 11a des languettes 11, le déplacement concomitant de la bague tronconique correspondante 10 vers le pignon de transmission jusqu'à ce que la bague 10 vienne en appui par friction sur la portée tronconique correspondante 13 de ce pignon. Ensuite, le manchon de crabotage 3 exerce sur les rampes 11a des languettes 11 un effort axial permettant de déplacer radialement les languettes 11 intérieurement suivant les zones de flexibilité ZF comme symbolisé par la flèche F2 de la figure 10 sur l'une des languettes 11, de manière à permettre au manchon de crabotage 3 de poursuivre son déplacement vers le pignon de transmission 3 jusqu'à ce que les crabots 5, 8 rentrent mutuellement en contact.

## Revendications

1. Dispositif de synchronisation pour boîte de vitesses mécanique notamment d'un véhicule automobile, comprenant au moins un pignon de transmission (1,2) monté fou sur un arbre d'entraînement et comportant sur l'une de ses faces des crabots (5) régulièrement répartis autour de son axe de symétrie, un manchon de crabotage (3) solidaire en rotation de l'arbre d'entraînement en étant déplaçable sur cet arbre vers le pignon de transmission (1,2) et comportant sur au moins l'une de ses faces des crabots (8) régulièrement répartis autour de son axe de symétrie et pouvant rentrer en contact avec les crabots (5) du pignon de transmission (1,2) lors du déplacement du manchon (3) vers le pignon de transmission (1,2) pour entraîner ce dernier en rotation, **caractérisé en ce qu'**il comprend une bague tronconique (10) interposée entre le manchon de crabotage (3) et le pignon de transmission (1,2), liée à rotation au manchon de crabotage (3) par des tocs (11) solidaires de la bague tronconique (10) et permettant un déplacement de la bague tronconique (10) vers le pignon de transmission (1,2) lors du déplacement dans le même sens du manchon de crabotage (3) pour amener la bague tronconique (10) en contact par friction sur une portée tronconique conjuguée (13) d'une paroi cylindrique (14) solidaire de la face latérale du pignon de transmission (1,2) autour des crabots (5) de ce dernier, avant que les crabots (8) du manchon de crabotage (3) viennent en contact avec ceux du pignon de transmission (1,2).

2. Dispositif selon la revendication 1, **caractérisé en ce que** les tocs (11) de la bague tronconique (10) comprennent chacun une languette traversant une fenêtre (12) réalisée au travers du manchon de crabotage (3) et comportant sur l'un de ses côtés une rampe (11a) coopérant avec une rampe antagoniste (12a) de l'un des bords de la fenêtre (12) pour permettre au manchon de crabotage (3) d'exercer sur chacun des tocs (11) un effort axial de déplacement de la bague tronconique (10) vers le pignon de transmission (1,2).

3. Dispositif selon la revendication 2, **caractérisé en ce que** chaque toc (11) est relié à la bague tronconique (10) par une zone de flexibilité (ZF) permettant au manchon de crabotage (3) d'exercer sur le toc (11), par la rampe (12a) de la fenêtre (12) en appui sur la rampe (11a) du toc, un effort circonférentiel écartant élastiquement le toc (11) vers le bord de la fenêtre (12) opposé à celui comportant la rampe (12a) lorsque la bague tronconique (10) est en appui sur la portée tronconique (13) de manière à permettre à la rampe (12a) de la fenêtre (12) d'effacer la rampe (11a) du toc (11) pour que le manchon de crabotage (3) puisse continuer son déplacement de crabotage avec le pignon de transmission (1,2).

4. Dispositif selon la revendication 2 ou 3, **caractérisé en ce que** les bords des fenêtres (12) comportant les rampes (12a) sont des bords radiaux et chaque languette formant toc (11) est disposée sensiblement transversalement au bord radial correspondant de la fenêtre (12).

5. Dispositif selon la revendication 1, **caractérisé en ce que** les tocs (11) de la bague tronconique (10) comprennent chacun une languette traversant une fenêtre (12) réalisée au travers du manchon de crabotage (3) et comportant sur l'une de ses faces une rampe (11a) coopérant avec une rampe antagoniste (12a) de l'un des côtés de la fenêtre (12) pour permettre au manchon de crabotage (3) d'exercer sur chacun des tocs (11) un effort axial de déplacement de la bague tronconique (10) vers le pignon de transmission (1,2).

6. Dispositif selon la revendication 5, **caractérisé en ce que** chaque toc (11) est relié à la bague tronconique (10) par une zone de flexibilité (ZF) permettant au manchon de crabotage (3) d'exercer sur le toc (11), par la rampe (12a) de la fenêtre (12) en appui sur la rampe (11a) du toc, un effort radial écartant élastiquement le toc (11) vers le bord de la fenêtre (12) opposé à celui comportant la rampe (12a) lorsque la bague tronconique (10) est en appui sur la portée tronconique (13) de manière à permettre à la rampe (12a) de la fenêtre (12) d'effacer la rampe (11a) du toc (11) pour que le manchon de crabotage (3) puisse continuer son déplacement de crabotage avec le pignon de transmission (1,2).

7. Dispositif selon la revendication 5 ou 6, **caractérisé en ce que** les bords des fenêtres (12) comportant les rampes (12a) sont des bords sensiblement circonférentiels et chaque languette formant toc (11) est disposée sensiblement parallèlement au bord circonférentiel correspondant de la fenêtre (12).

8. Dispositif selon l'une des revendications précédentes, **caractérisé en ce que** les tocs (11) sont régulièrement espacés autour de l'axe de symétrie de la bague tronconique (10) et s'étendent en direction opposée au pignon de transmission (1,2).

9. Dispositif selon l'une des revendications précédentes, **caractérisé en ce que** les tocs (11) et la bague tronconique (10) sont une pièce monobloc.
